Europäisches Patentamt

**European Patent Office**

Office européen des brevets

(19)

(11) Publication number : **0 349 623 B1**

(12) **EUROPEAN PATENT SPECIFICATION**

(45) Date of publication of patent specification :
05.08.92 Bulletin 92/32

(51) Int. Cl.⁵ : **H04Q 3/52**

(21) Application number : **89900445.1**

(22) Date of filing : **31.10.88**

(86) International application number :
**PCT/US88/03847**

(87) International publication number :
**WO 89/06473 13.07.89 Gazette 89/15**

(54) **Active communication network.**

(30) Priority : **28.12.87 US 138619**

(43) Date of publication of application :
**10.01.90 Bulletin 90/02**

(45) Publication of the grant of the patent :
**05.08.92 Bulletin 92/32**

(84) Designated Contracting States :
**DE FR GB**

(56) References cited :
**EP-A- 0 216 167**
**FR-A- 2 454 633**
**US-A- 3 883 222**
**US-A- 4 707 062**

(56) References cited :
**Proceedings of the IEEE, vol. 75, no. 11, November 1987, IEEE, (New York, US) - W.J. Tomlinson et al.:**
**"Telecommunicationsapplications of integrated optics and optoelectronics", pages 1512-1523**

(73) Proprietor : **Hughes Aircraft Company**
**7200 Hughes Terrace P.O. Box 45066**
**Los Angeles, California 90045-0066 (US)**

(72) Inventor : **TANGONAN, Gregory, L.**
**141 Santa Rosa**
**Oxnard, CA 93035 (US)**

(74) Representative : **KUHNEN, WACKER & PARTNER**
**Alois-Steinecker-Strasse 22 Postfach 1553**
**W-8050 Freising (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an active communication network according to the preamble of claim 1.

Computer architectures now commonly comprise a large number of processors executing programs concurrently. Such parallel computing architectures require a communication network between processors and between processors and memories. In parallel processing systems, it is desirable to allow many processors to send information to the processors and/or memories simultaneously.

The use of optics for the communication network is particularly effective, since optical systems can provide appropriate inherent parallelism, suitable bandwidths and low interaction between separate beams in a linear medium.

One of the most important optical communication networks utilizes the well known crossbar network. In particular, the crossbar network allows all processors and/or memories to he dynamically interconnected in an arbitrary permutation, without moving any existing interconnections.

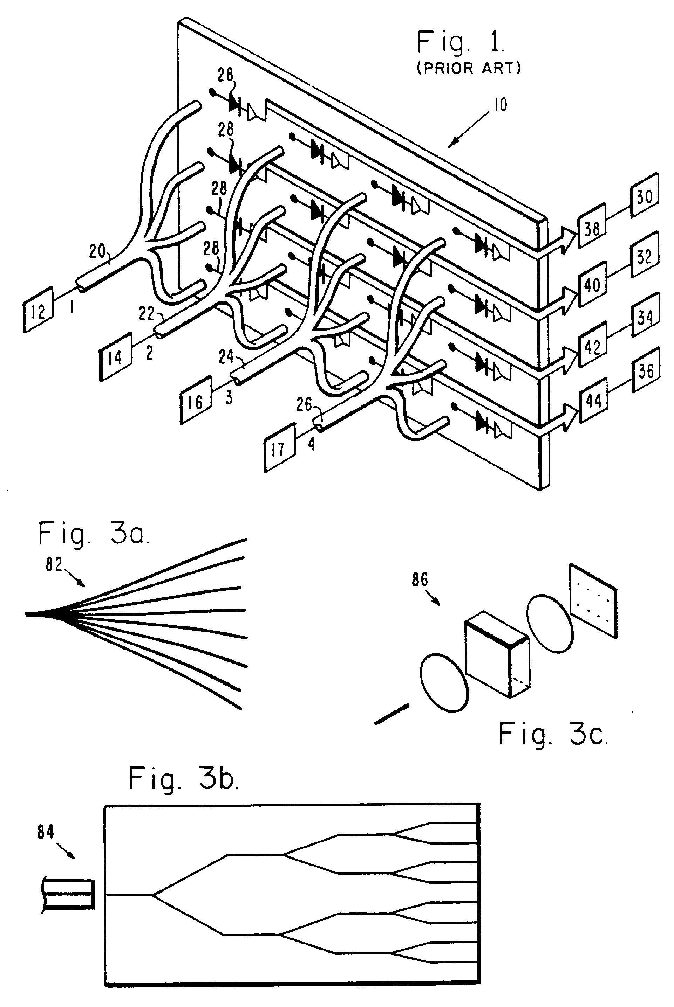

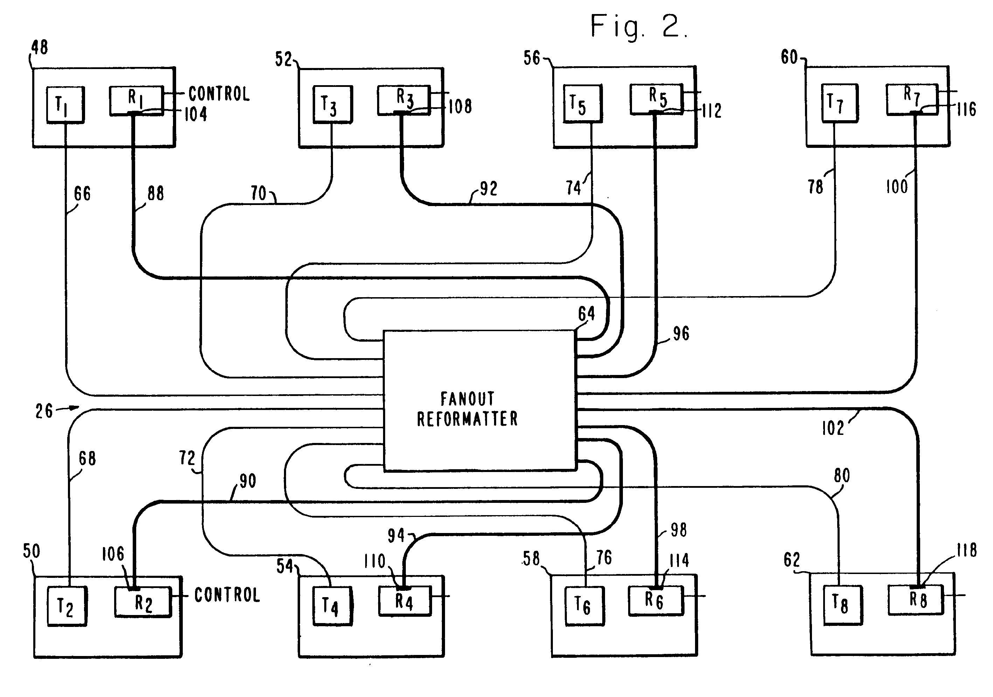

Attention is now directed to FIG. 1 which exemplifies a "star" crossbar network 10 according to the preamble of claim 1 that utilizes otpo-electronic detection components. The crossbar network 10 of this type is disclosed in MacDonald et al, Electron Lett. 16 (1978) 402. The disclosure is incorporated herein by reference. The crossbar network 10 includes four transmitters, 12, 14, 16 and 18, each of which transmitters may be considered to be run by a processor. The transmitters provide input signals which are routed on optical fibers 20, 22, 24, and 26. The four separate inputs 20, 22, 24, 26, are in turn, fanned out four times and then made incident on 16 separate detectors 28. Each of the detectors 28 comprises a photodetector connected in series with a preamplifier, and each detector 28 provides the same electronic function, namely, to serve as a switching element. Briefly, each of the detectors 28 inputs light, and outputs an electrical signal on instruction from bias control circuitry (not shown). In operation, therefore, the crossbar network 10 functions to allow selection of a particular transmitted input signal for rebroadcast to a desired output (a memory or processor unit), shown in FIG. 1 as receivers 30, 32, 34, and 36. This rebroadcasting further requires a conversion of the electrical signals to optical signals by way of optical repeaters 38, 40, 42, 44, and transmission over a return fiber line.

In other words, the communication network of Fig. 1 (MacDonald et al) is used for connecting a plurality of **N** transmitters to a plurality of individually selectable **N** receivers by means of an optical fiber routing means which provides a connection route between the transmitters and the receivers. Moreover, as this known network comprises switching means for connecting a respective transmitter to a respectively selectable receiver via the routing means which is responsive to instruction signals of the a.m. (not shown) bias control circuitry, this kind of network can be referred to as an "active" network.

**US-4 707 062** discloses a star shaped coupler which comprises a plurality of single-core optical fibers for branching purposes; this star shaped coupler, however, does not comprise any switching means, this network, therefore, being a "passive" network.

**EP-A2-0 216 167** discloses an expansion means for a passive optical bus system which is characterized by the provision of a plurality of mixers G1 to Gm. It follows that this known network, too, has no switching means.

A main disadvantage of an active network (to which the present invention belongs) resides in the fact that it is impossible to provide a network which extends over more than a few meters.

Therefore, it is the object of the present invention to improve an active communication network according to the preamble of claim 1 in such a way that an effective communication can be performed over great distances.

According to the present invention this object is solved by the advantageous measures indicated in the characterizing part of claim 1.

The advantageous measures indicated in the characterizing part of claim 1 are providing a distributed switching assembly in which the switching functions are distributed to receivers which are located remotely with respect to the optical fiber routing means, thereby enabling to omit the optical repeaters and, thus, to highly increase the overall network extension.

In detail, according to claim 1, the a.m. distributed switching assembly of the present invention is realized by packaging each of the **N** transmitters together with a corresponding one of the **N** receivers, thereby forming a respective transmitter-receiver pair, wherein each of the **N** receivers comprises a switched array of **N** detectors for selectively detecting a particular transmitted signal; these features substitute the known central switching means. This distributed construction of the switching means of the present invention, however, necessitates to modify the routing means by further providing a fanout-reformatter which (a) accepts a signal output from each transmitter, (b) fans out this signal from **1** to **N** branches and (c) reformats all of the **K**th branches, where **K** is from **1** to **N**, from each transmitter for providing **N** inputs to the **K**th receiver.

Advantageous developments of the invention are subject matter of the subclaims.

The fanout-reformatter preferably comprises a passive optical structure. Preferably, the fanout-reformatter provides efficient throughput, easy alignment, and is suitable for large arrays, for example, where N is 64, 128 or 256. Preferred such fanout-reformatters include a fused half-star coupler, a planar waveguide structure, or crossed phase gratings. For all three identified 1 to N branching techniques, it is desirable that the fanout-reformatter:

1. exhibits low throughput loss e.g., less than 2dB, particularly less than 3db for N equal to 128;
2. provides a reconfiguration time of less than 10 microseconds, particularly less than 1 microseconds; and/or
3. processes asynchronous signals that may he outputted from the transmitter.

Satisfactory fanout-reformatters are available from commercial vendors, for example, model 8010 Monolithic Splitter from Corning, NY .

Reformatting involves gathering the Kth branches from each of the 1 to N fanouts and forming a suitable cable structure. In the cable structure, the identity of each branch can be established by labeling each cable or by the position of the branch in a ribbon of fibers.

It is an advantage of the present invention that the assembly comprises receivers that include a suitable array of N detectors for detecting and selecting a particular transmitted signal to be processed by a particular receiver. Such detection electronics preferably comprise opto-electronics and includes conventional electrical signal summation/ amplification, optical signal regeneration, and a switch controller. Accordingly, using well known techniques, for example, those disclosed by MacDonald et al, turning on the bias on a particular switch controller provides selection for a particular desired transmitted signal for retransmission to a desired receiver. Note that it is in this sense that we call the present switch a distributed crossbar, since the switching elements are located at the transmitter/receiver nodes. This is different from the prior art "star" network which uses a centrally positioned switching unit.

Note that it is another advantage of all aspects of the invention that the optical repeaters 38-44 required in the prior art architecture are eliminated in the present invention.

The invention is illustrated in the accompanying drawing, in which

FIG. 1 is a circuit diagram of a prior art active communication network;

FIG. 2 is a circuit diagram for the circuit used in the present invention; and

FIGS. 3a, b, c provide schematics of a fanout-reformatter employed in the present invention.

Attention is now directed to FIG. 2 which shows an assembly 46 of the present invention. The assembly 46 includes 8 pairs of transmitter-receiver units packaged together, numerals 48-62, and a fan-out reformatter 64. The fan-out reformatter 64 can accept a signal output from each of the transmitters that is routed along optical fibers 66-80. The fan-out reformatter 64 reformats the input optical fibers 66-80 in the following way.

To start, the optical fiber 66 from the first transmitter is split into 8 branches. The splitting may be done in accordance with the splitting scheme shown in FIG. 3. For example, FIG. 3a shows that the optical fiber can be split from 1 to 8 branches using a half-star coupler 82 structure. FIG. 3b shows that the optical fiber can be split from 1 to 8 branches using a planar network 84 structure. FIG. 3c shows that the optical fiber can be split from 1 to 8 branches using a cross-phase grating 86 structure. Thus, in all these cases, an exemplary structure is shown for splitting an input optical fiber into 8 branches. Continuing, the input optical fiber 68 from the second transmitter is split into 8 branches, again using, equivalently, any of the structures shown in FIG. 3. Further, and in the same manner, each of the input optical fibers 70, 72, 74, 76, 78 and 80 from the remaining 6 transmitters are split into 8 branches, again in accordance with the FIG. 3 structures. At this stage, therefore, there are 8 input groups of 8 branches each, or 64 total branches.

As indicated above, reformatting involves gathering the 64 branches in an appropriate manner to form a cable for input to the receivers. This is done as follows. To start, the first branch from each of the 8 input groups is bundled together, using the reverse of any of the structural branching techniques shown in FIG. 3. This procedure therefore establishes a first cable comprising the first branch from all of the 8 input groups. The first cable, shown in FIG. 2 as optical fiber 88, is routed to the first receiver. Continuing, the second branch from each of the 8 input groups is bundled together, again using the reverse of any of the structural branching techniques shown in FIG. 3. This procedure therefore establishes a second cable comprising the second branch from all of the 8 input groups. The second cable, shown in FIG. 2 as optical fiber 90, is routed to the second'receiver. Further, and in the same manner, the third, fourth, fifth, sixth, seventh and eighth branches from each of the 8 input groups, are individually bundled together by way of the structural techniques shown in FIG. 3. This procedure, accordingly, establishes 6 more cables, shown in FIG. 2 as optical fibers 92-102. The optical fibers 92-102 are routed, respectively, to the third through eighth receivers.

At this point, each of the 8 receivers has an input fiber optic cable comprising 8 separate branches bundled together. The fiber optic cable in each receiver is inputed to the opto-electronic detectors that form part of each receiver. The 8 opto-electronic detector units shown in FIG. 2 are indicated by numerals 104-118. Each of the 8 opto-electronic detector units 104-118, in turn, address the 8 separate branches that are bundled together and inputed to each receiver. Each of the 8 detector units 104-118 comprises conventional electrical signal summation/amplification, optical signal regeneration, and a switch controller-(not shown). As indicated above, each of the 8 opto-electronic detector units 104-118 provides selection for a particular desired transmitter signal, one to eight, to be received by a particular desired receiver, one to eight.

## Claims

1. An active communication network for connecting a plurality of **N** transmitters $(T_1\text{-}T_8)$ to a plurality of individually selectable **N** receivers $(R_1\text{-}R_8)$, comprising:

[a] optical fiber routing means *(26)* providing a connection route between said transmitters $(T_1\text{-}T_8)$ and said receivers $(R_1\text{-}R_8)$; and

[b] switching means (10) for connecting a respective transmitter to a respectively selectable receiver via said routing means *(26)*; *characterized in that*

[c] each of said **N** transmitters $(T_1\text{-}T_8)$ is packaged together with a corresponding one of said **N** receivers $(R_1\text{-}R_8)$, thereby forming a respective transmitter-receiver pair *(48, 50, 52, 54, 56, 58, 60, 62)*;

[d] each of said **N** receivers $(R_1\text{-}R_8)$ comprises a switched array of **N** detectors for selectively detecting a particular transmitted signal, thereby forming said switching means (10); and in that

[e] said routing means *(26)* comprises a fanout-reformatter *(64)* which

[e1] accepts a signal output from each transmitter $(T_1\text{-}T_8)$;

[e2] fans out said signal from **1** to **N** branches; and

[e3] reformats all of the Kth branches, where **K** is from **1** to **N**, from each transmitter $(T_1\text{-}T_8)$ for providing **N** inputs to the Kth receiver $(R_1\text{-}R_8)$.

2. Active communication network according to claim 1, *characterized in that* said fanout-reformatter *(64)* is passiv.

3. Active communication network according to claim 2, *characterized in that* said fanout-reformatter *(64)* comprises a fused half-star coupler *(Fig.3a)*.

4. Active communication network according to claim 2, *characterized in that* said fanout-reformatter *(64)* comprises a planar waveguide structure *(Fig.3c)*.

5. Active communication network according to claim 2, *characterized in that* said fanout-reformatter *(64)* comprises a crossed phase gratings *(Fig.3b)*.

6. Active communication network according to one of claims 1 to 5, *characterized in that* said fanout-reformatter *(64)* reconfigures a signal in less than 10 microseconds.

7. Active communication network according to one of claims 1 to 6, *characterized in that* at least one of said **N** transmitters $(T_1\text{-}T_8)$ outputs an asynchronous signal.

8. Active communication network according to one of claims 1 to 7, *characterized in that* each of said transmitter-receiver pairs are separated from each other by at least 100 m.

9. Active communication network according to one of claims 1 to 7, *characterized in that* the **K**th of said transmitter-receiver pairs is separated from the **N**th transmitter-receiver pair by at least 100 m.

10. Active communication network according to one of claims 1 to 9, *characterized in that* **N** is 2 to 256.

## Patentansprüche

1. Aktives Kommunikationsnetzwerk zum Verbinden einer Vielzahl von **N** Sendern $(T_1\text{-}T_8)$ mit einer Vielzahl von individuell wählbaren **N** Empfängern $(R_1\text{-}R_8)$ mit:

[a] einer Lichtleitfaser-Leitwegeinrichtung *(26)*, die einen Verbindungsweg zwischen den Sendern $(T_1\text{-}T_8)$ und den Empfängern $(R_1\text{-}R_8)$ liefert; und

[b] einer Schalteinrichtung (10) zum Verbinden eines jeweiligen Senders mit einem jeweils wählbaren Empfänger über die Leitwegeinrichtung *(26)*; *dadurch gekennzeichnet, daß*

[c] jeder der **N** Sender $(T_1\text{-}T_8)$ zusammen mit einem zugeordneten der **N** Empfänger $(R_1\text{-}R_8)$ montiert ist, wodurch ein jeweiliges Sender-Empfänger-Paar *(48, 50, 52, 54, 56, 58, 60, 62)* gebildet wird;

[d] jeder der **N** Empfänger $(R_1\text{-}R_8)$ eine geschaltete Anordnung von **N** Detektoren zum selektiven Erfassen eines bestimmten gesendeten Signals aufweist, wodurch die Schalteinrichtung (10) gebildet wird; und daß

[e] die Leitwegeinrichtung *(26)* einen Ausgangsfächerungs-Umformatierer *(64)* aufweist, der

[e1] ein von jedem Sender $(T_1\text{-}T_8)$ ausgegebenes Signal annimmt;

[e2] das Signal über **1** bis **N** Zweige ausfächert; und

[e3] alle **K**-ten Zweige - wobei **K** von **1** bis **N** läuft - aus jedem Sender $(T_1\text{-}T_8)$ umformatiert, um dem **K**-ten Empfänger $(R_1\text{-}R_8)$ **N** Eingänge zu liefern.

2. Aktives Kommunikationsnetzwerk nach Anspruch 1, *dadurch gekennzeichnet, daß* der Ausgangsfächerungs-Umformatierer *(64)* passiv ist.

3. Aktives Kommunikationsnetzwerk nach Anspruch 2, *dadurch gekennzeichnet, daß* der Ausgangsfächerungs-Umformatierer *(64)* einen verschmolzenen Halbstern-Koppler *(Fig. 3a)* aufweist.

4. Aktives Kommunikationsnetzwerk nach Anspruch 2, *dadurch gekennzeichnet, daß* der Ausgangsfächerungs-Umformatierer *(64)* eine planare Wellenleiterstruktur *(Fig. 3c)* aufweist.

5. Aktives Kommunikationsnetzwerk nach Anspruch 2, *dadurch gekennzeichnet, daß* der Ausgangsfächerungs-Umformatierer *(64)* ein gekreuztes Phasenbeugungsgitter *(Fig. 3b)* aufweist.

6. Aktives Kommunikationsnetzwerk nach einem der Ansprüche 1 bis 5, *dadurch gekennzeichnet, daß* der Ausgangsfächerungs-Umformatierer *(64)* ein Signal in weniger als 10 Mikrosekunden umgruppiert.

7. Aktives Kommunikationsnetzwerk nach einem der Ansprüche 1 bis 6, *dadurch gekennzeichnet, daß* mindestens einer der **N** Sender *(T₁-T₈)* ein asynchrones Signal ausgibt.

8. Aktives Kommunikationsnetzwerk nach einem der Ansprüche 1 bis 7, *dadurch gekennzeichnet, daß* alle Sender-Empfänger-Paare mindestens 100 m voneinander getrennt sind.

9. Aktives Kommunikationsnetzwerk nach einem der Ansprüche 1 bis 7, *dadurch gekennzeichnet, daß* das **K**-te Sender-Empfänger-Paar vom **N**-ten Sender-Empfänger-Paar um mindestens 100 m getrennt ist.

10. Aktives Kommunikationsnetzwerk nach einem der Ansprüche 1 bis 9, *dadurch gekennzeichnet, daß* **N** den Wert 2 bis 256 hat.

## Revendications

1. Réseau de communication actif destiné à connecter une pluralité de **N** émetteurs *(T₁-T₈)* à une pluralité de **N** récepteurs *(R₁-R₈)* pouvant être sélectionnés individuellement, comportant :

   [a] des moyens d'acheminement *(26)* à fibres optiques établissant un acheminement de connexions entre lesdits émetteurs *(T₁-T₈)* et lesdits récepteurs *(R₁-R₈)* ; et

   [b] des moyens de commutation (10) destinés à connecter un émetteur respectif à un récepteur pouvant être sélectionné respectivement par l'intermédiaire desdits moyens d'acheminement *(26)* ; *caractérisé en ce que*

   [c] chacun desdits **N** émetteurs *(T₁-T₈)* est conditionné avec un, correspondant, desdits **N** récepteurs *(R₁-R₈)*, formant ainsi une paire respective émetteur-récepteur *(48, 50, 52, 54, 56, 58, 60, 62)* ;

   [d] chacun desdits **N** récepteurs *(R₁-R₈)* comprend un ensemble commuté de **N** détecteurs destinés à détecter sélectivement un signal émis particulier, formant ainsi lesdits moyens de commutation (10) ; et en ce que

   [e] lesdits moyens d'acheminement *(26)* comprennent un reformateur de diffusion *(64)* qui

   [e1] accepte un signal de sortie provenant de chaque émetteur *(T₁-T₈)* ;

   [e2] diffuse ledit signal de **1** à **N** branches ; et

   [e3] reformate la totalité des **K**ième branches, où **K** est compris entre **1** et **N**, à partir de chaque émetteur *(T₁-T₈)* pour appliquer **N** entrées au **K**ième récepteur *(R₁-R₈)*.

2. Réseau de communication actif selon la revendication 1, *caractérisé en ce que* ledit reformateur *(64)* de diffusion est passif.

3. Réseau actif de communication selon la revendication 2, *caractérisé en ce que* ledit reformateur de diffusion *(64)* comprend un coupleur fusionné en demi-étoile *(figure 3a)*.

4. Réseau actif de communication selon la revendication 2, *caractérisé en ce que* ledit réformateur de diffusion *(64)* comprend une structure de guide d'ondes plane *(figure 3c)*.

5. Réseau actif de communication selon la revendication 2, *caractérisé en ce que* ledit reformateur de diffusion *(64)* comprend des réseaux à phases croisées *(figure 3b)*.

6. Réseau actif de communication selon l'une des revendications 1 à 5, *caractérisé en ce que* ledit reformateur de diffusion *(64)* reconfigure un signal en moins de 10 microsecondes.

7. Réseau actif de communication selon l'une des revendications 1 à 6, *caractérisé en ce qu'*au moins l'un desdits **N** émetteurs *(T₁-T₈)* délivre en sortie un signal asynchrone.

8. Réseau actif de communication selon l'une des revendications 1 à 7, *caractérisé en ce que* chacune desdites paires émetteur-récepteur est séparée des autres par au moins 100 m.

9. Réseau actif de communication selon l'une des revendications 1 à 7, *caractérisé en ce que* la **K**ième desdites paires émetteurs-récepteurs est séparée de la **N**ième paire émetteur-récepteur d'au moins 100 m.

10. Réseau actif de communication selon l'une des revendications 1 à 9, *caractérisé en ce que* **N** est compris entre 2 et 256.

Fig. 1.
(PRIOR ART)

Fig. 3a.

Fig. 3c.

Fig. 3b.

Fig. 2.